Europäisches Patentamt

European Patent Office

Office européen des brevets

(11) Veröffentlichungsnummer: **0 334 001**

**A1**

(12) **EUROPÄISCHE PATENTANMELDUNG**

(21) Anmeldenummer: 89101673.5

(22) Anmeldetag: 01.02.89

(51) Int. Cl.⁴: **A21B 1/48**

(30) Priorität: 24.03.88 DE 8803991 U

(43) Veröffentlichungstag der Anmeldung:
27.09.89 Patentblatt 89/39

(84) Benannte Vertragsstaaten:
**DE GB IT NL**

(71) Anmelder: Hecrona Maschinen
Industriegesellschaft m.b.H.
Hocksteiner Weg 56
D-4050 Mönchengladbach(DE)

(72) Erfinder: Lassmann, Heribert, Dipl.-Ing.
Erlenweg 53
D-4152 Kempen(DE)
Erfinder: Mertens, Hans Georg, Dipl.-Ing.
Schmaler Weg 9a
D-4060 Viersen(DE)
Erfinder: Koslowski, Hans-Günter, Ing. grad.
Fadheider Strasse 63
D-4156 Willich-2(DE)

(74) Vertreter: Stark, Walter, Dr.-Ing.
Moerser Strasse 140
D-4150 Krefeld(DE)

(54) **Durchlaufofen für Backwaren.**

(57) Die Erfindung betrifft einen Durchlaufofen für Backwaren, mit einem langgestrecktem Backraum (1), durch den ein Trägerband für die Backwaren bewegt wird, und mit wenigstens einem Brenner (10) zum Erzeugen von Heizgas, welches Heizgaskanäle (4, 6, 7, 9) durchströmt, die den Backraum (1) oben und unten begrenzen. Der Durchlaufofen ist gekennzeichnet durch gesonderte Heizgasführungen für Oberhitze und Unterhitze mit einem die Oberseite des Backraumes begrenzenden Heizgasvorlaufkanal (4) und einer daran anschließenden oberen Heizgasrückführung (6), mit einem die Unterseite des Backraumes begrenzenden Heizgasvorlaufkanal (7) und einer daran anschließenden unteren Heizgasrückführung (9), und mit jeweils mehreren über die Länge der Heizvorlaufkanäle angeordneten Brennern (10).

EP 0 334 001 A1

FIG. 1

## Durchlaufofen für Backwaren

Die Erfindung betrifft einen Durchlaufofen für Backwaren, mit einem langgestreckten Backraum, durch den ein Trägerband für die Backwaren bewegt wird, und mit wenigstens einem Brenner zum Erzeugen von Heizgas, welches Heizgaskanäle durchströmt, die den Backraum oben und unten begrenzen.

Durchlauföfen oder Tunnelöfen für Backwaren sind in verschiedenen Ausführungen bekannt. Ihre Heizgaskanäle und ihre Heizgasführungen sind so ausgelegt, daß jeweils ein bestimmtes Produkt bzw. eine Gruppe von Produkten unter optimalen Bedingungen, also mit bestimmter Ober-und Unterhitze gebacken werden können. Dabei stehen die Temperaturkurven für Oberhitze und Unterhitze stets in einem Abhängigkeitsverhältnis zueinander. Oberhitze und Unterhitze können in der Regel nicht seperat eingestellt werden. Da bekannte Durchlauföfen dieser Gattung in der Regel nur einen Brenner besitzen, der die erforderlichen Heizgase erzeugt, ist die Länge des Backraumes wegen des naturgemäß auftretenden Temperaturabfalls begrenzt. Der Temperaturverlauf über die Länge des Backraumes läßt sich nur mit hohem technischen Aufwand und auch dann nur unbefriedigend beeinflussen.

Aufgabe der Erfindung ist es, einen Durchlaufofen der eingangs beschriebenen Gattung so zu verbessern, daß sehr lange Backräume mit in weiten Grenzen einstellbaren Temperaturkurven verwirklicht werden können, so daß der Durchlaufofen zum Backen aller gängigen Backwaren geeignet ist.

Diese Aufgabe wird gelöst mit einem Durchlaufofen der eingangs beschriebenen Gattung, der gekennzeichnet ist durch gesonderte Heizgasführungen für Oberhitze und Unterhitze mit einem die Oberseite des Backraumes begrenzenden Heizgasvorlaufkanal und einer daran anschließenden oberen Heizgasrückführung, mit einem die Unterseite des Backraumes begrenzenden Heizgasvorlaufkanal und einer daran anschließenden unteren Heizgasrückführung, und mit jeweils mehreren über die Länge der Heizgasvorlaufkanäle angeordneten Brennern. Die getrennte Heizgasführung für Ober- und Unterhitze sowie die Anordnung mehrerer Brenner über die Länge der Heizgasvorlaufkanäle ermöglichen nicht nur eine weitgehend unabhängige Einstellung von Oberhitze und Unterhitze, sondern auch in einem weiten Bereich die Einstellung von Temperaturkurven über die Länge des Backraumes. Dementsprechend kann der Durchlaufofen bei entsprechender Einstellung zum Backen einer Vielzahl unterschiedlicher Backwaren eingesetzt werden.

Der thermische Wirkungsgrad des Ofens kann verbessert werden, wenn die Heizgasrückführungen am vorderen Ende des Durchlaufofens in ihre zugeordneten Heizgasvorlaufkanäle münden, weil dann die Heizgase in weitgehend geschlossenen Kreisläufen geführt sind. Dadurch wird der Energieverbrauch reduziert, außerdem werden die anfallenden Rauchgasmengen kleiner. Zur Unterstützung des Heizgaskreislaufes können die Heizgasvorlaufkanäle am hinteren Ende des Durchlaufofens über Umwälzgebläse an ihre zugeordneten Heizgasrückführungen angeschlossen sein. Die Einstellung der gewünschten Temperaturkurve wird erleichtert, wenn die Umwälzgebläse drehzahlgeregelt sind. Für Backwaren, die eine sehr unterschiedliche Einstellung von Oberhitze und Unterhitze erfordern, kann auch ein regelbarer Bypaß zwischen den Umwälzgebläsen für Oberhitze und Unterhitze vorgesehen werden, so daß z. B. eine volle Beaufschlagung der Heizgasführung für Oberhitze und eine sanfte Heizgasführung für Unterhitze oder umgekehrt möglich ist.

Zur Ableitung überschüssiger Heizgase weisen die Heizgasrückführungen im Bereich des vorderen Endes des Durchlaufofens einen Kaminanschluß auf. Dabei kann von der unteren Heizgasrückführung eine den Backraum außen umgebende Ringleitung zum Kaminanschluß führen.

Vom Backraum sollte wenigstens eine Schwadenleitung ausgehen, die mit einem Schwadenschieber verschließbar ist. Vom Schwadenschieber kann ein zu einem Schwadenventilator führendes Saugrohr ausgehen. Durch entsprechende Einstellung des Schwadenschiebers und/oder des Schwadenventilators läßt sich die Schwadenführung im Backraum beeinflussen. Zusätzlich kann wenigstens ein im Bereich einer Längsseite des Backraumes angeordneter Ventilator zum Umwälzen der im Backraum vorhandenen Schwaden vorgesehen sein. Die dadurch erzeugte Turbulenz der Schwaden im Backraum verbessert das Produkt und senkt die Energiekosten. Durch den Einbau von in Stufen schaltbaren Heizelementen an diesem Ventilator kann die Temperaturverteilung im Backraum zusätzlich beeinflußt werden.

Schließlich kann zur besseren Energieausnutzung oder zur Leistungssteigerung die Oberseite und/oder die Unterseite des Backraumes eine gewellte Oberfläche aufweisen. Dadurch kann die Strahlungsfläche wesentlich vergrößert werden.

Im folgenden wird ein in der Zeichnung dargestelltes Ausführungsbeispiel der Erfindung erläutert; es zeigen:

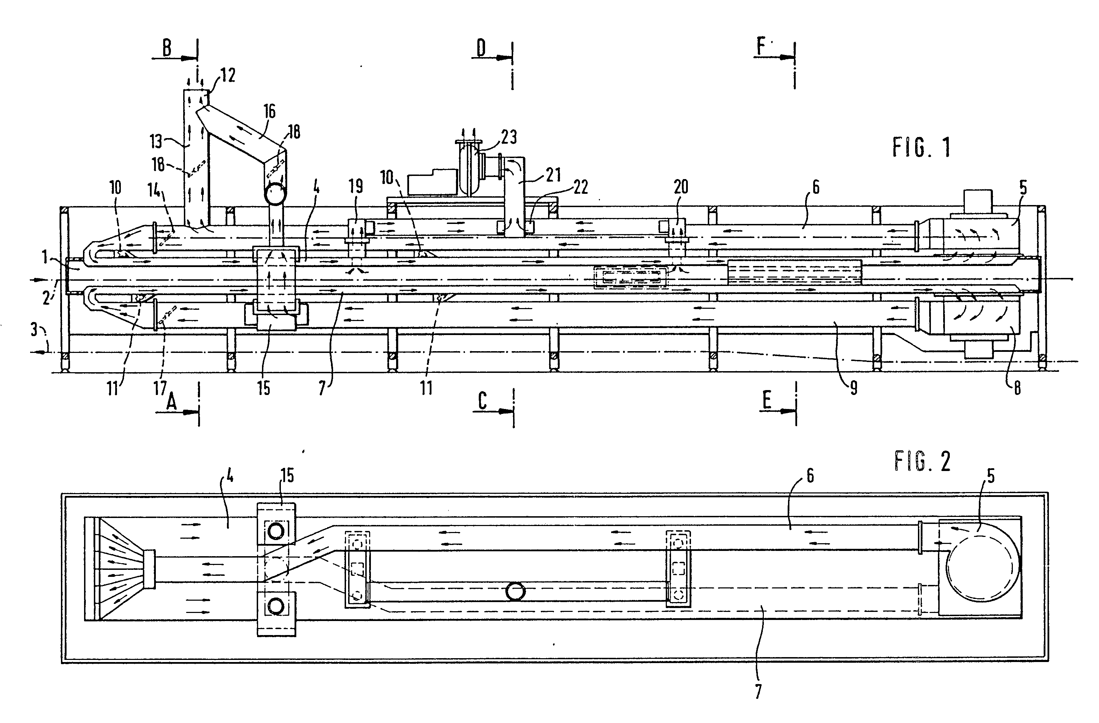

Fig. 1 schematisch eine Seitenansicht eines Durchlaufofens für Backwaren,

Fig. 2 schematisch eine Draufsicht auf den Gegenstand nach Fig. 1,

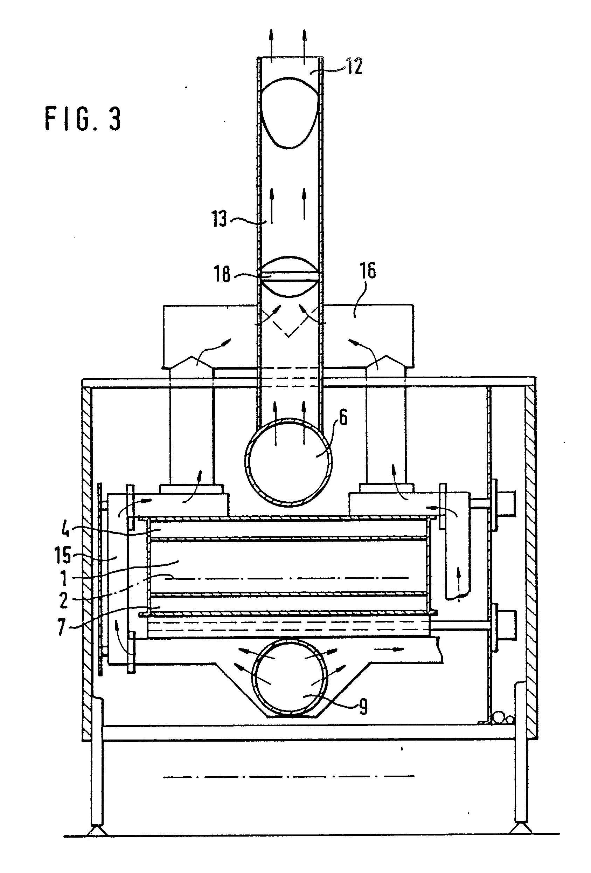

Fig. 3 einen Schnitt in Richtung A-B durch den Gegenstand nach Fig. 1,

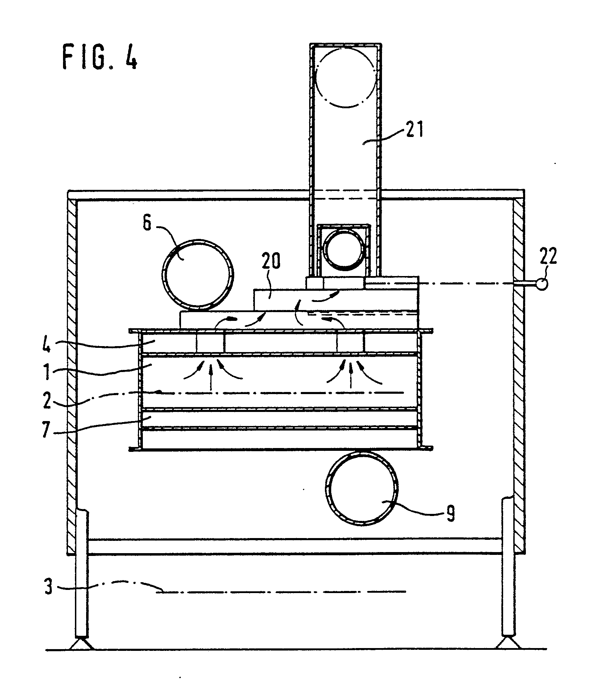

Fig. 4 einen Schnitt in Richtung C-D durch den Gegenstand nach Fig. 1,

Fig. 5 einen Schnitt in Richtung E-F durch den Gegenstand nach Fig. 1,

Fig. 6 einen Querschnitt durch den Backraum.

Der dargestellte Durchlaufofen für Backwaren besitzt einen langgestreckten Backraum 1, durch den das Obertrumm 2 eines Trägerbandes geführt ist, dessen Untertrumm 3 unter dem Durchlaufofen zurückgeführt wird. Die Oberseite des Backraums 1 wird von einem Heizgasvorlauf kanal 4 begrenzt, der sich über die gesamte Länge des Backraumes 1 erstreckt und der am hinteren Ende des Durchlaufofens in einen Umwälzventilator 5 mündet. Vom Umwälzventilator 5 geht eine Heizgasrückführung 6 aus, durch die die Heizgase über die Länge des Durchlaufofens wieder zum Anfang des Heizgasvorlaufkanals 4 zurückgeführt werden. Entsprechendes gilt für die Unterseite des Backraumes 1 mit unterem Heizgasvorlaufkanal 7, zugeordnetem unteren Umwälzventilator 8 und unterer Heizgasrückführung 9. Die Umwälzventilatoren 5 und 8 sind drehzahlgeregelt. Damit besitzt der Durchlaufofen getrennte Heizgasführungen für Ober- und Unterhitze. Bei einer nicht dargestellten Ausführung kann zwischen den Umwälzventilatoren 5 und 8 ein nicht dargestellter regelbarer Bypaß vorgesehen sein, der es ermöglicht, die Heizgasführung so zu steuern, daß z. B. eine volle Beaufschlagung der Heizgasführung für Oberhitze und eine sanfte Beaufschlagung der Heizgasführung für Unterhitze oder umgekehrt erfolgt.

Über die Länge jedes Heizgasvorlaufkanals 4 bzw. 7 sind mehrere Brenner 10 bzw. 11 angeordnet. Bei der dargestellten Ausführung sind nur zwei Brenner 10 bzw. 11 in jedem Heizgasvorlaufkanal 4 bzw. 7 vorgesehen. Es können aber auch mehr Brenner vorgesehen sein. Über die Brenner 10 bzw. 11 kann die Energiezufuhr einerseits für Oberhitze und andererseits für Unterhitze gesondert gesteuert werden. Außerdem läßt sich dadurch die Temperaturkurve über die Länge des Backraumes 1 kontrollieren.

Ein Teil der jeweils im Kreislauf geführten Heizgase wird in einen Kamin 12 abgeleitet. Dazu weist die obere Heizgasrückführung im Bereich des vorderen Endes des Durchlaufofens einen Kaminanschluß 13 auf. In Strömungsrichtung hinter dem Kaminanschluß 13 ist in der oberen Heizgasrückführung 6 ein regelbares Absperrorgan 14 vorgesehen. Von der unteren Heizgasrückführung 9 geht im vorderen Bereich des Durchlaufofens eine Ringleitung 15 aus, die zu einem zugeordneten Kaminanschluß 16 führt. In Strömungsrichtung hinter der Ringleitung 15 ist in der unteren Heizgasrückführung 9 ein regelbares Absperrorgan 17 vorgesehen. Außerdem sind beide Kaminanschlüsse 13 und 16 mit regelbaren Absperrorganen 18 versehen.

Im mittleren Teil des Durchlaufofens schließen an die Oberseite des Backraumes 1 mit gegenseitigem Abstand zwei Schwadenleitungen 19, 20 an, die den oberen Heizgasvorlaufkanal 4 durchdringen und in ein gemeinsames Saugrohr 21 übergehen, in dem sich ein Schwadenschieber 22 befindet und das zu einem Schwadenventilator 23 führt. Die im Backraum 1 vorhandenen Schwaden werden auf diese Weise abgeführt.

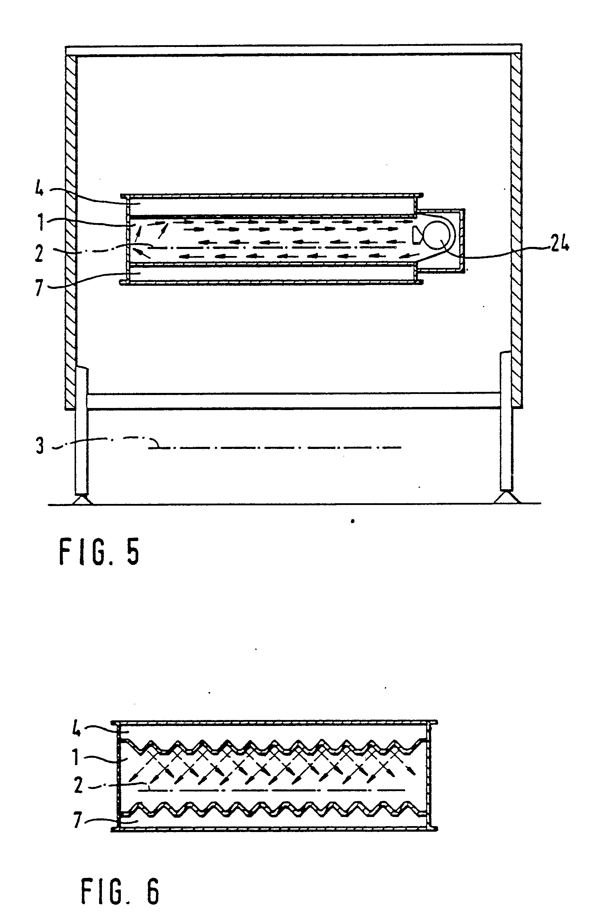

Zur Umwälzung der im Backraum 1 vorhandenen Schwaden dienen im Bereich einer Längsseite des Backraumes 1 angeordnete Ventilatoren 24, von denen einer in Fig. 5 dargestellt ist. In dieser Fig. sind mit Pfeilen die von den Ventilatoren 24 erzeugten Turbulenzen bzw. Umwälzungen der Schwaden angedeutet. Die Ventilatoren 24 können in Stufen schaltbare Heizelemente aufweisen, so daß zusätzlich die Temperaturverteilung im Backraum 1 verbessert oder beeinflußt werden kann.

In Fig. 6 ist schließlich noch eine Ausführung des Backraumes 1 dargestellt, der eine bessere Energieausnutzung ermöglicht oder zur Leistungssteigerung dient. Dazu besitzen die Oberseite und die Unterseite des Backraumes 1 jeweils eine gewellte Oberfläche, wodurch die Strahlungsfläche erheblich vergrößert wird.

## Ansprüche

1. Durchlaufofen für Backwaren, mit einem langgestreckten Backraum, durch den ein Trägerband für die Backwaren bewegt wird, und mit wenigstens einem Brenner zum Erzeugen von Heizgas, welches Heizgaskanäle durchströmt, die den Backraum oben und unten begrenzen, gekennzeichnet durch gesonderte Heizgasführungen für Oberhitze und Unterhitze mit einem die Oberseite des Backraumes (1) begrenzenden Heizvorlaufkanal (4) und einer daran anschließenden oberen Heizgasrückführung (6), mit einem die Unterseite des Backraumes (1) begrenzenden Heizgasvorlaufkanal (7) und einer daran anschließenden unteren Heizgasrückführung (9), und mit jeweils mehreren über die Länge der Heizgasvorlaufkanäle (4 bzw. 7) angeordneten Brennern (10 bzw. 11).

2. Durchlaufofen nach Anspruch 1, dadurch gekennzeichnet, daß die Heizgasrückführungen (6, 9) am vorderen Ende des Durchlaufofens in ihre zugeordneten Heizgasvorlaufkanäle (4, 7) münden.

3. Durchlaufofen nach Anspruch 1 oder 2, dadurch gekennzeichnet, daß die Heizgasvorlaufkanäle (4, 7) am hinteren Ende des Durchlaufofens über Umwälzgebläse (5, 8) an ihre zugeordneten Heizgasrückführrollen (6, 9) angeschlossen sind.

4. Durchlaufofen nach Anspruch 3, dadurch gekennzeichnet, daß die Umwälzventilatoren (5, 8) drehzahlgeregelt sind.

5. Durchlaufofen nach einem der Ansprüche 1 bis 4, gekennzeichnet durch einen regelbaren Bypaß zwischen den Umwälzgebläsen (5, 8) für Oberhitze und Unterhitze.

6. Durchlaufofen nach einem der Ansprüche 1 bis 5, dadurch gekennzeichnet, daß die Heizgasrückführungen (6, 9) im Bereich des vorderen Endes des Durchlaufofens einen Kaminanschluß (13, 16) aufweisen.

7. Durchlaufofen nach einem der Ansprüche 1 bis 6, dadurch gekennzeichnet, daß von der unteren Heizgasrückführung (9) eine den Backraum (1) außen umgebende Ringleitung (15) zum Kaminanschluß (16) führt.

8. Durchlaufofen nach einem der Ansprüche 1 bis 7, gekennzeichnet durch wenigstens eine vom Backraum (1) ausgehende Schwadenleitung (19, 20), die mit einem Schwadenschieber (22) verschließbar ist.

9. Durchlaufofen nach Anspruch 8, dadurch gekennzeichnet, daß vom Schwadenschieber (22) ein zu einem Schwadenventilator (23) führendes Saugrohr (21) ausgeht.

10. Durchlaufofen nach einem der Ansprüche 1 bis 9, gekennzeichnet durch wenigstens einen im Bereich einer Längsseite des Backraumes (1) angeordneten Ventilator (24) zum Umwälzen der im Backraum (1) vorhandenen Schwaden.

11. Durchlaufofen nach Anspruch 10, gekennzeichnet durch in Stufen schaltbare Heizelemente am Ventilator (24).

12. Durchlaufofen nach einem der Ansprüche 1 bis 11, dadurch gekennzeichnet, daß die Oberseite und/oder die Unterseite des Backraumes (1) eine gewellte Oberfläche aufweisen.

FIG. 1

FIG. 2

EP 0 334 001 A1

FIG. 3

FIG. 4

FIG. 5

FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 075 312 (T. & T. VICARS LTD) * Seite 2, Zeile 93 - Seite 4, Zeile 27; Figuren 1-8 * --- | 1-3,5 | A 21 B 1/48 |
| A | DE-A-2 647 992 (P.E. MEINCKE) --- | | |
| A | GB-A-2 045 593 (SIMON-VICARS LTD) --- | | |
| A | GB-A- 614 252 (BAKER PERKINS LTD et al.) ----- | | |

| | RECHERCHIERTE SACHGEBIETE (Int. Cl.4) |
|---|---|
| | A 21 B |

Der vorliegende Recherchenbericht wurde für alle Patentansprüche erstellt

| Recherchenort | Abschlußdatum der Recherche | Prüfer |
|---|---|---|
| DEN HAAG | 27-06-1989 | FRANKS N.M. |